# EUROPÄISCHE PATENTSCHRIFT

(11) **EP 3 254 891 B1**
(45) Veröffentlichungstag und Bekanntmachung des Hinweises auf die Patenterteilung: **10.04.2019**
(21) Anmeldenummer: 17174199.4
(22) Anmeldetag: 02.06.2017
(51) Int. Cl.: B60N 2/90, B60N 2/68, B60N 2/20, B60N 2/30, B60N 2/36

(54) **LEHNENKONSTRUKTION**
BACKREST STRUCTURE
CONSTRUCTION DE DOSSIER

(30) Priorität: 07.06.2016 DE 102016210034; 20.09.2016 DE 102016218008
(43) Veröffentlichungstag der Anmeldung: 13.12.2017
(73) Patentinhaber: Adient Luxembourg Holding S.à r.l., 1855 Luxembourg (LU)
(72) Erfinder: KREUELS, Olaf, 66482 Zweibrücken (DE); HAMMANN, Heinrich, 67806 Teschenmoschel (DE); DILL, Thomas, 67699 Heiligenmoschel (DE); WIEGE, Jakob, 67661 Kaiserslautern (DE); ENNS, Viktor, 67663 Kaiserslautern (DE)
(74) Vertreter: Finger, Catrin

(56) Entgegenhaltungen:
- DE-A1-102007 011 874
- DE-A1-102009 023 451
- DE-A1-102014 220 405

## Beschreibung

Die Erfindung betrifft eine Lehnenkonstruktion eines Rücksitzes eines Fahrzeugs.

Aus dem Stand der Technik ist eine Lehnenkonstruktion eines Rücksitzes eines Fahrzeugs bekannt, die eine Außensitzlehne mit einer ersten Verriegelungskonstruktion zur Verriegelung der Außensitzlehne in einer Fahrposition und ein Lehnenteil mit einer zweiten Verriegelungskonstruktion zur Verriegelung des Lehnenteils in einer Fahrposition umfasst. Das Abklappen des Lehnenteils von der Fahrposition in eine abgeklappte Position ist abhängig vom Abklappen der Außensitzlehne von der Fahrposition in deren abgeklappte Position.

Aus DE 10 2009 023 451 A1 ist ein Rückenlehnenbereich bekannt, welcher beim Schwenken aus einer Designposition hin zu einer Cargoposition einen anderen Rückenlehnenbereich in die Cargoposition mitnimmt.

Aus DE 10 2014 212 387 A1 ist ein Fahrzeugsitz mit einem Sitzteil und einer Rückenlehne bekannt, die im entriegelten Zustand von einer Gebrauchsstellung in eine Nichtgebrauchsstellung klappbar ist.

Aus EP 2 142 398 B1 ist ein Fahrzeugsitz mit einem Sitzteil und einer geteilten Rückenlehne, die ein erstes Segment und ein zweites Segment aufweist, bekannt.

Aus DE 10 2014 220 405 A1 ist eine Verstellvorrichtung für eine Rücksitzbank, umfassend ein Sitzteil und eine geteilte Rückenlehne mit zumindest einem Lehnensegment und einem benachbarten Lehnensegment, bekannt. Das Umklappen eines karosserieseitigen Lehnenelements hat dabei immer ein Umklappen des benachbarten Lehnensegments zur Folge.

Aufgabe der vorliegenden Erfindung ist es, eine verbesserte Lehnenkonstruktion eines Rücksitzes eines Fahrzeugs anzugeben.

Eine Lehnenkonstruktion ist Bestandteil eines Rücksitzes eines Fahrzeugs. Die Lehnenkonstruktion umfasst eine Außensitzlehne mit einer ersten Verriegelungskonstruktion zur Verriegelung der Außensitzlehne in einer Fahrposition und ein Lehnenteil mit einer zweiten Verriegelungskonstruktion zur Verriegelung des Lehnenteils in einer Fahrposition. Erfindungsgemäß ist eine Entriegelungsvorrichtung zur Entriegelung des Lehnenteils aus dessen Fahrposition vorgesehen, wobei die Entriegelungsvorrichtung durch Schwenken der Außensitzlehne aus deren Fahrposition in Richtung deren abgeklappter Position automatisch aktivierbar ist.

Erfindungsgemäß ist bei abgeklappter Außensitzlehne das Lehnenteil zwar nach oben, also in Richtung der Fahrposition schwenkbar, aber in dieser Fahrposition nicht arretierbar. Das Lehnenteil ist also nach seiner Entriegelung unabhängig von der Außensitzlehne schwenkbar, jedoch nicht mehr in der Fahrposition arretierbar.

Ein Fondpassagier wird dadurch, insbesondere wenn er sich auf den mittleren Rücksitzplatz zu setzen gedenkt, spüren, dass das im Bereich dieses Rücksitzplatzes angeordnete Lehnenteil weder arretiert noch arretierbar ist und wird somit auf ein Sicherheitsdefizit hingewiesen. Ein Sicherheitsdefizit kann insbesondere darin bestehen, dass ein an der Außensitzlehne angeordneter Gurtretraktor für einen Sicherheitsgurt für den mittleren Rücksitzplatz in abgeklappter Stellung der Außensitzlehne nicht ausreichend sicher für den mittleren Rücksitzplatz verwendbar ist.

Eine Ausgestaltung der Lehnenkonstruktion sieht vor, dass an der Außensitzlehne ein Mitnehmerblech angeordnet und fest mit diesem verbunden ist. Dadurch ist die automatische Aktivierung der Entriegelungsvorrichtung zur Entriegelung des Lehnenteils besonders einfach möglich.

Eine vorteilhafte Weiterbildung vorgenannter Ausgestaltung sieht vor, dass an einer Grundstruktur, welche ebenfalls Bestandteil der Lehnenkonstruktion ist, ein um ein Gelenk drehbares Hebelelement angeordnet ist, welches fest mit einem Entriegelungshebel verbunden ist. Dadurch ist auf einfache Weise eine Bewegungsumkehr ermöglicht, so dass beim Senken des Hebelelements ein Anheben des Entriegelungshebel bewirkt wird, in dessen Folge die erfindungsgemäße Aktivierung besonders einfach und kostengünstig ermöglicht wird, da ein an sich bekanntes Reclinerelement genutzt werden kann.

Dabei ist besonders bevorzugt beim Schwenken der entriegelten Außensitzlehne aus deren Fahrposition in Richtung deren abgeklappter Position zunächst das Mitnehmerblech an das Hebelelement anschlagbar. Beim weiteren Schwenken der entriegelten Außensitzlehne aus deren Fahrposition in Richtung deren abgeklappter Position bleibt das Mitnehmerblech mit dem Hebelelement in Kontakt und das Hebelelement ist um das Gelenk nach unten schwenkbar, wodurch das Entriegelungselement um das Gelenk nach oben schwenkbar ist. Dadurch, also durch die Bewegungsumkehr, ist die erfindungsgemäße Aktivierung strukturell besonders einfach und kostengünstig ermöglicht, da das bekannte Reclinerelement genutzt werden kann.

Eine Ausgestaltung der Lehnenkonstruktion sieht vor, dass ein mit dem Lehnenteil in Wirkverbindung stehendes Reclinerelement vorgesehen ist, das durch Schwenken der Außensitzlehne aus deren Fahrposition in Richtung deren abgeklappter Position automatisch aktivierbar ist.

Eine andere Ausgestaltung der Lehnenkonstruktion sieht vor, dass beim weiteren Schwenken der entriegelten Außensitzlehne aus deren Fahrposition in Richtung deren abgeklappter Position das sich nach oben schwenkende Hebelelement mit dem auf einer Drehachse angeordneten Reclinerelement, das besonders bevorzugt nockenartig, also exzentrisch ausgebildet ist, in Kontakt bringbar oder haltbar ist, welches bei fortgesetzter Schwenkbewegung der Außensitzlehne in Richtung deren abgeklappter Position nach oben schwenkbar ist, wodurch eine Entriegelung des Lehnenteils aus deren arretierter Fahrposition auslösbar ist. Dadurch ist das Lehnenteil anschließend nach unten, also in Richtung einer abgeklappten Position schwenkbar.

Eine weitere Ausgestaltung der Lehnenkonstruktion sieht eine Spannvorrichtung vor, mittels welcher das entriegelte Lehnenteil durch Federkraft in Richtung der abgeklappten Position drück- und/oder schwenkbar ist. Dadurch ist sichergestellt, dass ein entriegeltes Lehnenteil nach Entriegelung selbsttätig nach unten schwenkt.

Eine weitere Ausgestaltung der Lehnenkonstruktion sieht vor, dass die Achse des Gelenks parallel zur Drehachse des Reclinerelement angeordnet ist. Dadurch ist die Entriegelungsvorrichtung zur Entriegelung des Lehnenteils aus dessen Fahrposition besonders platzsparend.

Eine weitere Ausgestaltung der Lehnenkonstruktion sieht vor, dass das Reclinerelement und das Hebelelement im Wesentlichen flach ausgebildet und in einer Ebene angeordnet sind. Dadurch ist die Entriegelungsvorrichtung zur Entriegelung des Lehnenteils aus dessen Fahrposition besonders platzsparend und strukturell einfach und damit kostengünstig herstellbar.

Eine weitere Ausgestaltung der Lehnenkonstruktion sieht vor, dass freie Enden des Reclinerelements und des Hebelelements abgerundet sind. Dadurch ist die Entriegelungsvorrichtung zur Entriegelung des Lehnenteils aus dessen Fahrposition besonders leichtgängig und verschleißarm.

Ausführungsbeispiele der Erfindung werden anhand von Zeichnungen näher erläutert. Dabei zeigen:
- Figur 1: eine perspektivische Darstellung einer erfindungsgemäßen Lehnenkonstruktion,
- Figur 2: einen zugehörigen vergrößerten Ausschnitt,
- Figur 3: eine ausschnittsweise perspektivische Darstellung der erfindungsgemäßen Lehnenkonstruktion und
- Figur 4: eine weitere ausschnittsweise perspektivische Darstellung der erfindungsgemäßen Lehnenkonstruktion.

Einander entsprechende Teile sind in allen Figuren mit den gleichen Bezugszeichen versehen.

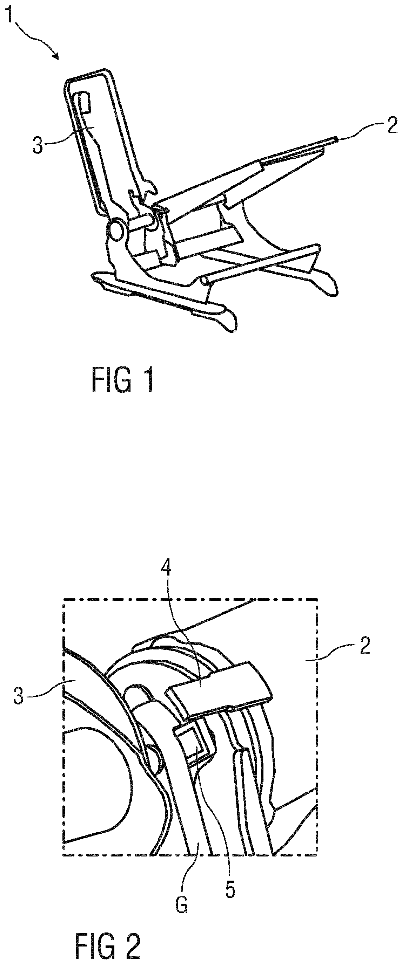

**Figur 1** zeigt eine perspektivische Darstellung einer erfindungsgemäßen Lehnenkonstruktion 1, die an einer Grundstruktur G, welche Bestandteil eines Sitzes einer Fahrzeugsitzreihe ist, angeordnet ist. Die Lehnenkonstruktion 1 umfasst eine Außensitzlehne 2 und ein Lehnenteil 3.

Die Gesamtbreite der Lehnenkonstruktion 1 beträgt etwa 60% der Gesamtbreite der Lehnen der zweiten Fahrzeugsitzreihe, wobei die Breite der Außensitzlehne 2 etwa 40% der Gesamtbreite der Lehnen der zweiten Fahrzeugsitzreihe und die Breite des Lehnenteils 3 etwa 20% der Gesamtbreite der Lehnen der zweiten Fahrzeugsitzreihe beträgt.

Die Außensitzlehne 2 ist aus ihrer Fahrposition entriegelt in einer Position dargestellt, in welcher sie weiter in Richtung ihrer abgeklappten Position, in welcher sie bevorzugt ebenfalls verriegelbar ist, geklappt wird. Das Lehnenteil 3 ist - noch - in seiner Fahrposition verriegelt.

Der in Figur 1 durch einen Kreis gekennzeichnete Ausschnitt ist in Figur 2 größer und detaillierter dargestellt.

**Figur 2** zeigt ein Mitnehmerblech 4, das an der Außensitzlehne 2, in Richtung des Lehnenteils 3 ragend angeordnet, insbesondere angeschweißt ist. Das Mitnehmerblech 4 ist in Kontakt mit einem drehbaren Hebelelement 5, welches an der Grundstruktur G befestigt ist. Bei einem weiteren Schwenken der Außensitzlehne 2 in Richtung der abgeklappten Stellung bewegt sich das Mitnehmerblech 4 weiter nach unten und drückt dabei das Hebelelement 5 ebenfalls weiter nach unten.

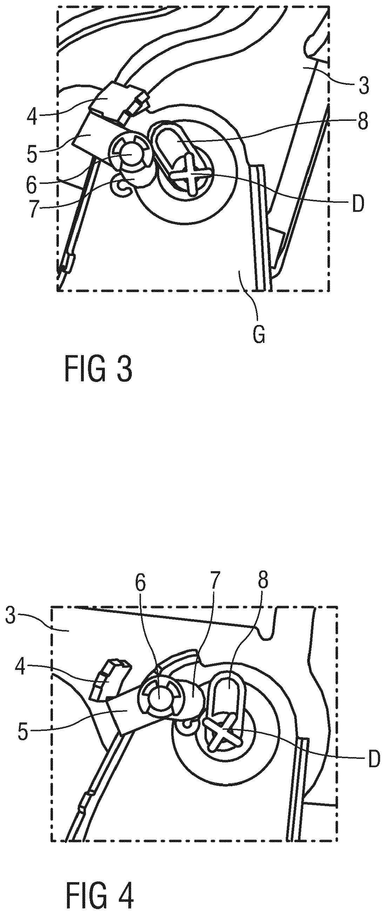

**Figur 3** zeigt die gleiche oder eine spätere Stellung wie bzw. als Figur 2, jedoch aus anderer Perspektive. Das Hebelelement 5 ist um ein Gelenk 6, welches an der Grundstruktur G angeordnet ist, drehbar. Ein Entriegelungshebel 7 ist fest mit dem Hebelelement 5 verbunden, wobei der Entriegelungshebel 7 und das Hebelelement 5 einen stumpfen Winkel bilden. Der Entriegelungshebel 7 kontaktiert oberseitig eine Unterseite eines nockenartigen, also exzentrisch auf einer Drehachse D angeordneten, um diese Drehachse D drehbaren Reclinerelementes 8. Entriegelungshebel 7 und das Hebelelement 5 dienen einer Bewegungsumkehr derart, dass bei einem vom sich senkenden Mitnehmerblech 4 bewirkten Schwenken des Hebelelementes 5 nach unten ein Schwenken des Entriegelungshebels 7 nach oben, also eine Drehung desselben entgegen dem Uhrzeigersinn, bewirkt wird. Durch den Kontakt zwischen Entriegelungshebel 7 und Reclinerelement 8 wird dadurch ein Schwenken des Reclinerelementes 8 nach oben, also eine Drehung desselben im Uhrzeigersinn, bewirkt.

**Figur 4** zeigt eine spätere Stellung als Figur 3 aus ähnlicher Perspektive. Beim weiteren Verdrehen des Reclinerelementes 8 infolge eines weiteren Senkens der hier nicht gezeigten Außensitzlehne 2 wurde das zuvor noch in Fahrposition verriegelte Lehnenteil 3 aus dieser Fahrposition entriegelt und mittels Federkraft nach unten geschwenkt. Das weitere Verdrehen des Reclinerelementes 8 wurde durch ein weiteres Absenken des Mitnehmerblechs 4, mithin durch ein weitergehendes Abklappen der Außensitzlehne 2 bewirkt.

### Bezugszeichenliste

- 1: Lehnenkonstruktion
- 2: Außensitzlehne
- 3: Lehnenteil
- 4: Mitnehmerblech
- 5: Hebelelement
- 6: Gelenk
- 7: Entriegelungshebel
- 8: Reclinerelement

- G: Grundstruktur
- D: Drehachse

## Patentansprüche

1. Lehnenkonstruktion (1) eines Rücksitzes eines Fahrzeugs, wobei die Lehnenkonstruktion (1) eine Außensitzlehne (2) mit einer ersten Verriegelungskonstruktion zur Verriegelung der Außensitzlehne (2) in einer Fahrposition und ein Lehnenteil (3) mit einer zweiten Verriegelungskonstruktion zur Verriegelung des Lehnenteils (3) in einer Fahrposition umfasst,
wobei eine Entriegelungsvorrichtung zur Entriegelung des Lehnenteils (3) aus dessen Fahrposition vorgesehen ist,
**dadurch gekennzeichnet, dass** die Entriegelungsvorrichtung durch Schwenken der Außensitzlehne (2) aus deren Fahrposition in Richtung deren abgeklappter Position automatisch derart aktivierbar ist, dass bei abgeklappter Außensitzlehne (2) das Lehnenteil (3) zwar nach oben schwenkbar, aber in dieser Fahrposition nicht arretierbar ist.

2. Lehnenkonstruktion (1) nach Anspruch 1, **dadurch gekennzeichnet, dass** an der Außensitzlehne (2) ein Mitnehmerblech (4) angeordnet und fest mit diesem verbunden ist.

3. Lehnenkonstruktion (1) nach Anspruch 2, **dadurch gekennzeichnet, dass** an einer Grundstruktur (G) ein um ein Gelenk (6) drehbares Hebelelement (5) angeordnet ist, welches fest mit einem Entriegelungshebel (7) verbunden ist.

4. Lehnenkonstruktion (1) nach Anspruch 3, **dadurch gekennzeichnet,**
- **dass** beim Schwenken der entriegelten Außensitzlehne (2) aus deren Fahrposition in Richtung deren abgeklappter Position zunächst das Mitnehmerblech (4) an das Hebelelement (5) anschlagbar ist
- **dass** beim weiteren Schwenken der entriegelten Außensitzlehne (2) aus deren Fahrposition in Richtung deren abgeklappter Position das Mitnehmerblech (4) mit dem Hebelelement (5) in Kontakt bleibt und dieses um das Gelenk (6) nach unten schwenkbar ist, wodurch das Entriegelungselement (7) um das Gelenk (6) nach oben schwenkbar ist.

5. Lehnenkonstruktion (1) nach einem der vorhergehenden Ansprüche, **gekennzeichnet durch** ein mit dem Lehnenteil (3) in Wirkverbindung stehendes Reclinerelement (8), das **durch** Schwenken der Außensitzlehne (2) aus deren Fahrposition in Richtung deren abgeklappter Position automatisch aktivierbar ist.

6. Lehnenkonstruktion (1) nach den Ansprüchen 3 und 5, **dadurch gekennzeichnet,**
**dass** beim weiteren Schwenken der entriegelten Außensitzlehne (2) aus deren Fahrposition in Richtung deren abgeklappter Position das sich nach oben schwenkende Hebelelement (5) mit dem auf einer Drehachse (D) angeordneten Reclinerelement (8) in Kontakt bringbar oder haltbar ist, welches bei fortgesetzter Schwenkbewegung der Außensitzlehne (2) in Richtung deren abgeklappter Position nach oben schwenkbar ist, wodurch eine Entriegelung des Lehnenteils (3) aus deren arretierter Fahrposition auslösbar ist.

7. Lehnenkonstruktion (1) nach einem der vorhergehenden Ansprüche, **gekennzeichnet durch** eine Spannvorrichtung, mittels welcher das entriegelte Lehnenteil (3) **durch** Federkraft in Richtung der abgeklappten Position drück- und/oder schwenkbar ist.

8. Lehnenkonstruktion (1) nach einem der Ansprüche 5 bis 7, **dadurch gekennzeichnet,**
**dass** die Achse des Gelenks (6) parallel zur Drehachse (D) des Reclinerelement (8) angeordnet ist.

9. Lehnenkonstruktion (1) nach einem der Ansprüche 5 bis 8, **dadurch gekennzeichnet,**
**dass** das Reclinerelement (8) und das Hebelelement (5) im Wesentlichen flach ausgebildet und in einer Ebene angeordnet sind.

10. Lehnenkonstruktion (1) nach einem der Ansprüche 5 bis 9, **dadurch gekennzeichnet,**
**dass** freie Enden des Reclinerelements (8) und des Hebelelements (5) abgerundet sind.

## Claims

1. Backrest structure (1) of a rear seat of a vehicle, wherein the backrest structure (1) comprises an outer seat backrest (2) with a first locking structure for the locking of the outer seat backrest (2) in a travel position and comprises a backrest part (3) with a second locking structure for the locking of the backrest part (3) in a travel position,
wherein an unlocking device for the unlocking of the backrest part (3) from its travel position is provided,
**characterized in that** the unlocking device is, by pivoting of the outer seat backrest (2) out of its travel position in the direction of its folded-down position, automatically activatable such that, when the outer seat backrest (2) has been folded down, the backrest part (3) is duly pivotable upward but is not lockable in said travel position.

2. Backrest structure (1) according to Claim 1, **characterized in that** a driver plate (4) is arranged on and fixedly connected to the outer seat backrest (2).

3. Backrest structure (1) according to Claim 2, **characterized in that**, on a main structure (G), there is arranged a lever element (5) which is rotatable about a joint (6) and which is fixedly connected to an unlocking lever (7).

4. Backrest structure (1) according to Claim 3, **characterized**
- **in that**, during the pivoting of the unlocked outer seat backrest (2) out of its travel position in the direction of its folded-down position, firstly the driver plate (4) can be caused to abut against the lever element (5),
- **in that**, during the further pivoting of the unlocked outer seat backrest (2) out of its travel position in the direction of its folded-down position, the driver plate (4) remains in contact with the lever element (5) and this is pivotable downward about the joint (6), whereby the unlocking element (7) is pivotable upward about the joint (6).

5. Backrest structure (1) according to any of the preceding claims, **characterized by** a recliner element (8) which is operatively connected to the backrest part (3) and which, by pivoting of the outer seat backrest (2) out of its travel position in the direction of its folded-down position, is automatically activatable.

6. Backrest structure (1) according to Claims 3 and 5, **characterized**
**in that**, during the further pivoting of the unlocked outer seat backrest (2) out of its travel position in the direction of its folded-down position, the upwardly pivoting lever element (5) can be brought into or held in contact with the recliner element (8) arranged on a rotary axle (D), which recliner element, during continued pivoting movement of the outer seat backrest (2) in the direction of its folded-down position, is pivotable upward, whereby unlocking of the backrest part (3) from its locked travel position can be triggered.

7. Backrest structure (1) according to any of the preceding claims, **characterized by** a tensioning device by means of which the unlocked backrest part (3) can be pushed and/or pivoted in the direction of the folded-down position by spring force.

8. Backrest structure (1) according to any of Claims 5 to 7, **characterized**
**in that** the axis of the joint (6) is arranged parallel to the rotary axle (D) of the recliner element (8).

9. Backrest structure (1) according to any of Claims 5 to 8, **characterized**
**in that** the recliner element (8) and the lever element (5) are of substantially flat form and arranged in a plane.

10. Backrest structure (1) according to any of Claims 5 to 9, **characterized**
**in that** free ends of the recliner element (8) and of the lever element (5) are rounded.

## Revendications

1. Construction de dossier (1) pour un siège arrière d'un véhicule, la construction de dossier (1) comprenant un dossier de siège extérieur (2) avec une première construction de verrouillage pour verrouiller le dossier de siège extérieur (2) dans une position de conduite et une partie de dossier (3) avec une deuxième construction de verrouillage pour verrouiller la partie de dossier (3) dans une position de conduite,
un dispositif de déverrouillage pour déverrouiller la partie de dossier (3) hors de sa position de conduite étant prévu,
**caractérisée en ce que** le dispositif de déverrouillage peut être activé automatiquement par pivotement du dossier de siège extérieur (2) hors de sa position de conduite dans la direction de sa position rabattue de telle sorte que lorsque le dossier de siège extérieur (2) est rabattu, la partie de dossier (3) puisse certes pivoter vers le haut, mais ne puisse pas être bloquée dans cette position de conduite.

2. Construction de dossier (1) selon la revendication 1, **caractérisée en ce qu'**une tôle d'entraînement (4) est disposée sur le dossier de siège extérieur (2) et est raccordée fixement à celui-ci.

3. Construction de dossier (1) selon la revendication 2, **caractérisée en ce qu'**un élément de levier (5) pouvant tourner autour d'une articulation (6) est disposé au niveau d'une structure de base (G), lequel est raccordé fixement à un levier de déverrouillage (7).

4. Construction de dossier (1) selon la revendication 3, **caractérisée en ce que**
- lors du pivotement du dossier de siège extérieur déverrouillé (2) hors de sa position de conduite dans la direction de sa position rabattue, la tôle d'entraînement (4) est d'abord appliquée contre l'élément de levier (5),
- lors du pivotement supplémentaire du dossier de siège extérieur déverrouillé (2) hors de sa position de conduite dans la direction de sa position rabattue, la tôle d'entraînement (4) reste en contact avec l'élément de levier (5) et celui-ci peut être pivoté vers le bas autour de l'articulation (6), de sorte que l'élément de déverrouillage (7) peut pivoter vers le haut autour de l'articulation (6).

5. Construction de dossier (1) selon l'une quelconque des revendications précédentes, **caractérisée par** un élément d'inclinaison (8) en liaison fonctionnelle avec la partie de dossier (3), lequel peut être activé automatiquement par pivotement du dossier de siège extérieur (2) hors de sa position de conduite dans la direction de sa position rabattue.

6. Construction de dossier (1) selon les revendications 3 et 5, **caractérisée en ce que** lors du pivotement supplémentaire du dossier de siège extérieur déverrouillé (2) hors de sa position de conduite dans la direction de sa position rabattue, l'élément de levier (5) pivotant vers le haut peut être amené ou maintenu en contact avec l'élément d'inclinaison (8) disposé sur un axe de rotation (D), lequel élément d'inclinaison, lors de la poursuite du mouvement de pivotement du dossier de siège extérieur (2) dans la direction de sa position rabattue, peut pivoter vers le haut de sorte qu'un déverrouillage de la partie de dossier (3) hors de sa position de conduite bloquée puisse être libéré.

7. Construction de dossier (1) selon l'une quelconque des revendications précédentes, **caractérisée par** un dispositif de serrage au moyen duquel la partie de dossier déverrouillée (3) peut être pressée et/ou pivotée par une force de ressort dans la direction de la position rabattue.

8. Construction de dossier (1) selon l'une quelconque des revendications 5 à 7, **caractérisée en ce que** l'axe de l'articulation (6) est disposé parallèlement à l'axe de rotation (D) de l'élément d'inclinaison (8).

9. Construction de dossier (1) selon l'une quelconque des revendications 5 à 8, **caractérisée en ce que** l'élément d'inclinaison (8) et l'élément de levier (5) sont réalisés sous forme essentiellement plate et sont disposés dans un plan.

10. Construction de dossier (1) selon l'une quelconque des revendications 5 à 9, **caractérisée en ce que** les extrémités libres de l'élément d'inclinaison (8) et de l'élément de levier (5) sont arrondies.
